# EUROPÄISCHE PATENTSCHRIFT

(11) **EP 1 687 886 B1**
(45) Veröffentlichungstag und Bekanntmachung des Hinweises auf die Patenterteilung: **16.02.2011**
(21) Anmeldenummer: 04786840.1
(22) Anmeldetag: 24.09.2004
(51) Int. Cl.: H02K 5/04, H02K 1/17

(54) **POLGEHÄUSE FÜR EINE ELEKTRISCHE MASCHINE SOWIE VERFAHREN ZUR HERSTELLUNG EINES POLGEHÄUSES**
STATOR HOUSING FOR AN ELECTRIC MACHINE AND METHOD FOR PRODUCING A STATOR HOUSING
STATOR POUR MACHINE ELECTRIQUE ET PROCEDE POUR PRODUIRE UN STATOR

(30) Priorität: 21.11.2003 DE 10354589
(43) Veröffentlichungstag der Anmeldung: 09.08.2006
(73) Patentinhaber: ROBERT BOSCH GMBH, 70442 Stuttgart (DE)
(72) Erfinder: HEIDRICH, Markus, 77815 Buehl (DE)
(86) Internationale Anmeldenummer: PCT/DE2004/002124
(87) Internationale Veröffentlichungsnummer: WO 2005/053138

(56) Entgegenhaltungen:
- EP-A- 0 655 824
- DE-A1- 3 036 865
- US-A- 5 412 267
- US-E- R E35 855
- PATENT ABSTRACTS OF JAPAN Bd. 1998, Nr. 10, 31. August 1998 (1998-08-31) -& JP 10 146002 A (MABUCHI MOTOR CO LTD), 29. Mai 1998 (1998-05-29)

## Beschreibung

### Stand der Technik

Polgehäuse für elektrische Maschinen sind aus dem Stand der Technik in unterschiedlichen Ausgestaltungen bekannt. Derartige Polgehäuse werden beispielsweise in Elektromotoren für Fahrzeuge verwendet, um verschiedenste elektrisch betriebene Einrichtungen im Fahrzeug anzutreiben. Üblicherweise sind in den Polgehäusen Dauermagnete befestigt. Um die magnetischen Feldlinien zu leiten, sind die Polgehäuse üblicherweise aus einem magnetisch leitenden Material hergestellt. Die Wandstärke des Polgehäuses muss dazu eine vorbestimmte Mindestdicke aufweisen, um Sättigungseffekte und damit magnetische Verluste zu vermeiden. Derartige Polgehäuse können beispielsweise aus einem Blechstreifen mit vorbestimmter Dicke gerollt werden, um ein im Wesentlichen rohrförmiges Polgehäuse herzustellen. Zur Fixierung eines Ankers werden dann an das rohrförmige Polgehäuse üblicherweise Lagerbügel befestigt.

Mit der DE 30 36 865 A1 ist ein Lüftermotor bekannt geworden, bei dem in einem Gehäusemantel ein Rückschlussmantel mit einer Haltevorrichtung für permanentmagnetische Erregermagnete einfügbar ist.

Die EP 0 655 824 A2 beschreibt einen bürstenlosen DC-Motor, bei dem innerhalb eines Motorgehäuses ein Rückschlusselement für den magnetischen Fluss der Permanentmagnete angeordnet ist. Dabei ist gemäß einer Ausführung ein Teil des Rückschlusselements als doppelt gefaltetes Stahlblech ausgebildet.

Weiterhin ist es auch bekannt, Polgehäuse mittels Tiefziehen herzustellen, wie es beispielsweise in der DE 10115 445 A1 offenbart ist. Hierbei wird das Polgehäuse aus einer

Metallplatte derart tiefgezogen, dass das Polgehäuse Bereiche mit unterschiedlichen Dicken aufweist. Dieses Verfahren ist jedoch sehr aufwendig und teuer.

### Vorteile der Erfindung

Das erfindungsgemäße Polgehäuse für eine elektrische Maschine mit den Merkmalen des Patentanspruchs 1 weist demgegenüber den Vorteil auf, dass es als ein einzelnes Teil in einem Herstellungsschritt herstellbar ist. Hierbei wird ein Bereich für einen magnetischen Rückschluss am Polgehäuse durch Umformen, insbesondere durch Umbiegen, eines Abschnitts eines Gehäusegrundkörpers des Polgehäuses hergestellt, wobei der Bereich für den magnetischen Rückschluss an der Position der mittleren Bereiche der Magnetelemente Aussparungen aufweist. Um eine weitere Gewichtsreduzierung des Polgehäuses zu erreichen, weist der Bereich für den magnetischen Rückschluss an der Position eines mittleren Bereichs eines am Polgehäuse angeordneten Magnetelements eine Aussparung auf. Da die Aussparung somit am neutralen Bereich des Magnetelements angeordnet ist, wird dadurch der magnetische Rückschluss nicht beeinträchtigt und Gewicht und Materialeinsatz können weiter verringert werden. Hierdurch können insbesondere engere Toleranzen hinsichtlich der Passung und der Konzentrizität des Polgehäuses gegenüber den bisherigen Herstellverfahren, insbesondere der gerollten Variante, erreicht werden. Darüber hinaus kann mit dem erfindungsgemäßen Polgehäuse eine Materialeinsparung und eine Gewichtsreduzierung erreicht werden, da insgesamt als Ausgangsmaterial ein Blech mit dünnerer Wandstärke verwendet werden kann. Somit kann das Polgehäuse einfach und sehr kostengünstig hergestellt werden.

Die Unteransprüche haben bevorzugte Weiterbildungen der Erfindung zum Gegenstand.

Um möglichst geringe magnetische Verluste aufzuweisen, liegt der Bereich für den magnetischen Rückschluss vorzugsweise spaltfrei am Gehäusegrundkörper an.

Besonders bevorzugt ist der Bereich für den magnetischen Rückschluss außerhalb des Gehäusegrundkörpers angeordnet. D.h., der Bereich für den magnetischen Rückschluss wird durch Umbiegen nach außen hergestellt, was relativ einfach und kostengünstig durchführbar ist. Gemäß einer anderen bevorzugten Ausgestaltung der Erfindung ist der Bereich für den magnetischen Rückschluss am inneren Umfangmantel des Gehäusegrundkörpers gebildet. D.h., der Bereich für den magnetischen Rückschluss wird durch Umbiegen nach innen hergestellt.

Weiter bevorzugt ist der Bereich für den magnetischen Rückschluss durch einen mehrfach umgebogenen Abschnitt des Gehäusegrundkörpers gebildet. Hierbei wird der Bereich für den magnetischen Rückschluss durch mehrfaches Umbiegen des Gehäusegrundkörpers hergestellt. Dadurch kann das Ausgangsmaterial für das Polgehäuse noch dünner gewählt werden und somit eine weitere Material- und Gewichtseinsparung erreicht werden. Der Bereich für den magnetischen Rückschluss ist dabei durch mehrere Lagen des Gehäusegrundkörpers gebildet.

Um die Teileanzahl weiter zu reduzieren, ist am Polgehäuse vorzugsweise ein Lagerbereich zur Lagerung eines Rotors der elektrischen Maschine integral gebildet. Dadurch können die Herstellungs- und Montagekosten für die elektrische Maschine weiter reduziert werden.

Um eine weitere Gewichtsreduzierung zu erreichen, ist vorzugsweise der Bereich für den magnetischen Rückschluss in Axialrichtung kürzer als der Gehäusegrundkörper ausgebildet. Besonders bevorzugt weist der Bereich für den magnetischen Rückschluss dabei eine Länge in Axialrichtung auf, welche auf die Breite eines am Polgehäuse angeordneten Magnetelements angepasst ist, d.h., minimal länger ist, um den magnetischen Rückschluss zu optimieren. Dadurch kann ein ausreichender magnetischer Rückschluss bei reduziertem Gewicht des Polgehäuses sichergestellt werden.

Besonders bevorzugt ist der Bereich für den magnetischen Rückschluss durch einen umgebogenen axialen Endabschnitt des Gehäusegrundkörpers gebildet.

Gemäß einer anderen bevorzugten Ausgestaltung der vorliegenden Erfindung ist der Bereich für den magnetischen Rückschluss durch Umbiegen eines mittleren Abschnitts des Gehäusegrundkörpers gebildet.

Eine weitere Reduktion der Einzelteile kann dadurch erreicht werden, dass am Gehäusegrundkörper vorzugsweise weiter ein Befestigungselement integral gebildet ist. Dabei kann die elektrische Maschine über das Befestigungselement z.B. an einem Fahrzeug befestigt werden oder sonstige Teile daran befestigt werden. Vorzugsweise ist dabei das Befestigungselement durch einen zusätzlichen umgebogenen Abschnitt des Gehäusegrundkörpers gebildet. Das Befestigungselement ist dabei vorzugsweise um ca. 90° relativ zum Gehäusegrundkörper umgebogen und weist eine Öffnung bzw. Aussparung zur Aufnahme eines Befestigungsmittels auf. Wenn der Bereich für den magnetischen Rückschluss eine wie vorher erwähnte Aussparung am mittleren Bereich des Magnetelements aufweist, ist das Befestigungselement vorzugsweise an dieser Aussparung angeordnet. Weiter bevorzugt werden zwei oder drei Befestigungselemente vorgesehen.

Um eine noch weitere Verringerung von Bauraum und Materialeinsatz des Polgehäuses zu erhalten, weist das Polgehäuse vorzugsweise einen abgeflachten Bereich an seinem äußeren Umfang auf. Besonders bevorzugt werden dabei zwei abgeflachte Bereiche vorgesehen, welche einander gegenüberliegend am Polgehäuse angeordnet sind.

Gemäß einer weiteren bevorzugten Ausgestaltung der vorliegenden Erfindung sind Durchgangsöffnungen im Gehäusegrundkörper ausgebildet. Dadurch kann eine verbesserte Durchströmung der elektrischen Maschine mit Kühlluft erreicht werden. Diese Öffnungen können selbstverständlich nur dann vorgesehen werden, wenn keine Dichtheit gegen Medien, wie z.B. Wasser, Öl, Benzin, Kühlmittel usw., für die elektrische Maschine notwendig ist.

Weiter betrifft die vorliegende Erfindung eine elektrische Maschine mit einem, wie vorhergehend beschriebenen, Polgehäuse. Die elektrische Maschine ist vorzugsweise als Elektromotor ausgebildet und wird besonders bevorzugt in Fahrzeugen als Antrieb für Hilfseinrichtungen des Fahrzeugs, wie z.B. Scheibenwischer, elektrische Fensterheber, elektrische Schiebedächer, Ventilatoren einer Klimaanlage, elektrische Stelleinrichtungen usw., verwendet.

Weiterhin betrifft die vorliegende Erfindung ein Verfahren zur Herstellung eines Polgehäuses für eine elektrische Maschine, wobei das Polgehäuse einen Gehäusegrundkörper aufweist und einen Bereich für einen magnetischen Rückschluss, der integral am Gehäusegrundkörper durch mindestens einen Umformschritt, insbesondere Umbiegen eines Abschnitts des Gehäusegrundkörpers, hergestellt ist, wobei an dem Bereich für den magnetischen Rückschluss an der Position der mittleren Bereiche der Magnetelemente Aussparungen ausgebildet werden.

### Zeichnung

Nachfolgend wird die Erfindung anhand von Beispielen, die das Verständnis der Erfindung erleichtern und von bevorzugten Ausführungsbeispielen in Verbindung mit der Zeichnung beschrieben. In der Zeichnung ist:
- Figur 1: eine schematische, perspektivische Schnittansicht eines Polgehäuses gemäß einem ersten Beispiel ,
- Figur 2: eine perspektivische Ansicht des in Figur 1 dargestellten Polgehäuses,
- Figur 3: eine Schnittansicht des in den Figuren 1 und 2 gezeigten Polgehäuses,
- Figur 4: eine perspektivische Ansicht eines Polgehäuses gemäß einem zweiten Beispiel ,
- Figur 5: eine perspektivische Ansicht eines Polgehäuses gemäß einem ersten Ausführungsbeispiel der vorliegenden Erfindung,
- Figur 6: eine perspektivische Ansicht eines Polgehäuses gemäß einem zweiten Ausführungsbeispiel der vorliegenden Erfindung,
- Figur 7: eine perspektivische Ansicht eines Polgehäuses gemäß einem dritten Beispiel ,
- Figur 8: eine geschnittene, perspektivische Ansicht eines Polgehäuses gemäß einem vierten Beispiel ,
- Figur 9: eine geschnittene, perspektivische Ansicht eines Polgehäuses gemäß einem fünften Beispiel ,
- Figur 10: eine geschnittene, perspektivische Ansicht eines Polgehäuses gemäß einem sechstem Beispiel , und
- Figur 11: eine schematische Schnittansicht eines Polgehäuses gemäß einem siebten Beispiel .

### Beschreibung der Beispiele sowie der Ausführungsbeispiele

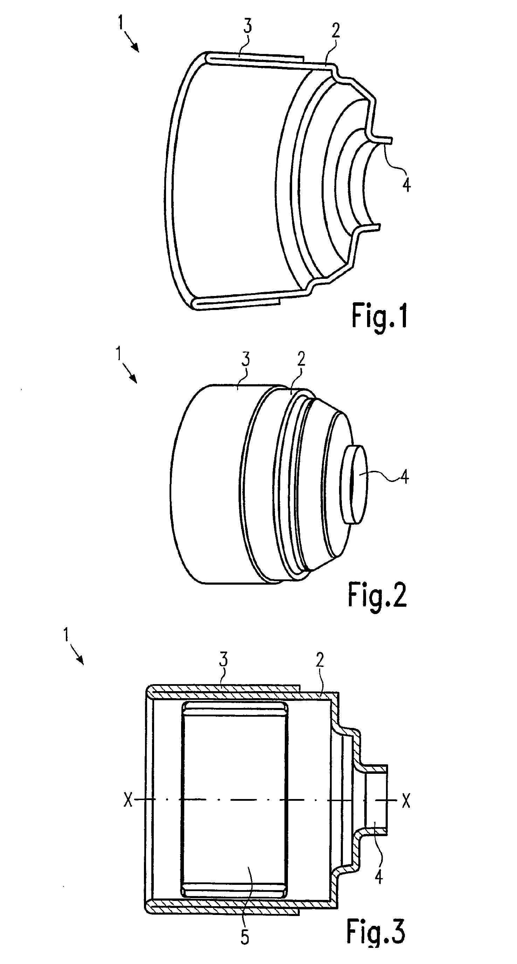

Nachfolgend wird unter Bezugnahme auf die Figuren 1 bis 3 ein Polgehäuse 1 gemäß einem ersten Beispiel beschrieben.

Wie in den Figuren 1 bis 3 gezeigt, besteht das Gehäuse aus einem im Wesentlichen zylindrischen Gehäusegrundkörper 2, an welchem integral ein Lagerbereich 4 zur Lagerung einer nicht dargestellten Rotorwelle einer elektrischen Maschine gebildet ist. Dabei sind zwischen dem Lagerbereich 4 und dem Gehäusegrundkörper 2 mehrere Abstufungen gebildet, welche entsprechend den inneren bzw. äußeren Gegebenheiten der elektrischen Maschine ausgebildet werden. Weiterhin ist am Gehäusegrundkörper ein Bereich 3 für einen magnetischen Rückschluss gebildet. Um einen ausreichend magnetischen Rückschluss sicherzustellen und dabei magnetische Verluste zu minimieren bzw. nicht auftreten zu lassen, muss der Bereich 3 für einen magnetischen Rückschluss eine gewisse Dicke aufweisen. Wie insbesondere aus Figur 3 ersichtlich ist, ist der Bereich für einen magnetischen Rückschluss durch Umbiegen eines Endabschnitts des Gehäusegrundkörpers 3 um 180° gebildet. Der Bereich 3 ist dabei nach außen umgebogen bzw. umgestülpt. Dabei ist zwischen dem Bereich 3 für den magnetischen Rückschluss und dem Gehäusegrundkörper 2 kein Spalt vorhanden, sodass der Bereich 3 eng am Gehäusegrundkörper 2 anliegt. Wie weiterhin aus Figur 3 ersichtlich ist, ist mindestens ein Magnetelement 5 am inneren Umfang des Gehäusegrundkörpers 2 an einer Position angeordnet, an welcher der Bereich 3 für den magnetischen Rückschluss ausgebildet ist. Dabei stellt das Polgehäuse 1 im Bereich des Magnetelements eine größere Dicke als an anderen Bereichen des Gehäusegrundkörpers bereit, sodass der magnetische Rückschluss ohne Verluste sichergestellt werden kann.

Wie aus Figur 3 deutlich wird, kann dabei für das Polgehäuse 1 ein Ausgangsmaterial mit einer geringeren Wandstärke verwendet werden, da der Bereich 3 für den magnetischen Rückschluss durch Umbiegen hergestellt wird und somit an diesem Bereich die doppelte Wandstärke des Ausgangsmaterials vorhanden ist. Im Vergleich mit dem Stand der Technik kann dadurch sowohl Material als auch Bauraum eingespart werden. Das Polgehäuse 1 kann dabei aus einem ebenen Blechstück mittels Ziehen und anschließendem oder gleichzeitigem Umbiegen bzw. Umstülpen hergestellt werden. Im Endzustand des Polgehäuses 1 ist dabei die Wandstärke zwischen 1,8 mm und 2 mm, sodass am Rückschlussbereich 3 eine Wandstärke zwischen 3,6 mm und 4 mm vorhanden ist. Somit kann der Rückschlussbereich für den Magnet durch einen doppellagigen Abschnitt des Polgehäuses bereitgestellt werden und besonders einfach und kostengünstig mittels Ziehen und Umformen, insbesondere Umbiegen, hergestellt werden. Der Bereich des Lagersitzes 4 und die weiteren Gehäusegrundkörperbereiche sind dabei in der Ausgangsblechstärke hergestellt, welche die notwendigen Festigkeitsanforderungen erfüllt, aber trotzdem eine erhebliche Gewichts- und Materialeinsparung ermöglicht.

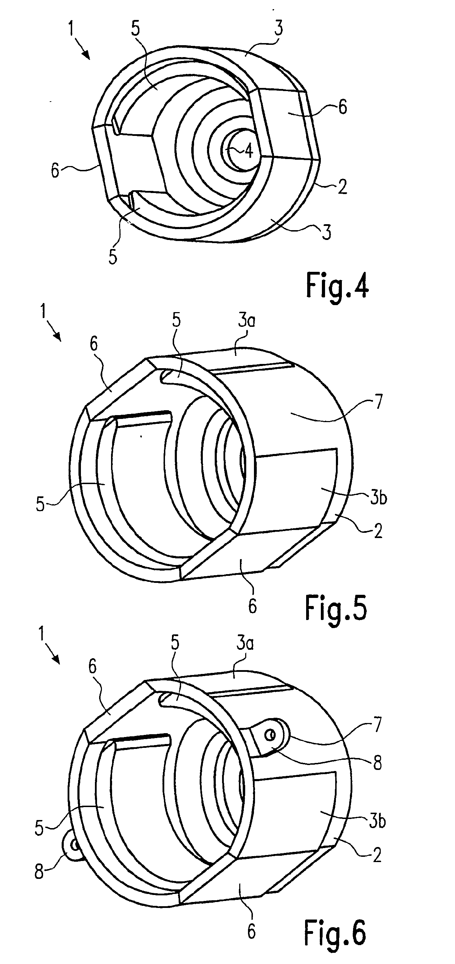

Nachfolgend wird unter Bezugnahme auf Figur 4 ein Polgehäuse 1 gemäß einem zweiten Beispiel beschrieben. Das zweite Beispiel entspricht dabei im Wesentlichen dem ersten Beispiel, wobei zur Verringerung des Bauraums am Polgehäuse 1 zwei abgeflachte Bereiche 6 ausgebildet sind. Die abgeflachten Bereiche 6 sind am Polgehäuse einander gegenüberliegend angeordnet. Die Magnetelemente 5 sind dabei im Inneren des Polgehäuses an einander gegenüberliegenden Positionen angeordnet, wobei die abgeflachten Bereiche 6 zwischen den Positionen der Magnetelemente 5 angeordnet sind. Ansonsten entspricht dieses Beispiel dem ersten Beispiel, sodass auf die dort gegebene Beschreibung verwiesen werden kann.

Nachfolgend wird unter Bezugnahme auf Figur 5 ein Polgehäuse 1 gemäß einem ersten Ausführungs-beispiel der vorliegenden Erfindung beschrieben, wobei gleiche bzw. funktional gleiche Teile wieder mit den gleichen Bezugszeichen wie in den vorhergehenden Beispielen bezeichnet sind.

Das erste Ausführungsbeispiel entspricht im Wesentlichen dem zweiten Beispiel und weist ebenfalls abgeflachte Bereiche 6 auf. Im Unterschied zum zweiten Beispiel sind beim ersten Ausführungsbeispiel jedoch zusätzlich Aussparungen 7 am Bereich 3 für den magnetischen Rückschluss gebildet. Die Aussparungen 7 sind dabei an einem mittleren Abschnitt des Magnetelements 5, d.h. um den neutralen Bereich des Magnetelements 5 herum, gebildet. Dadurch ergeben sich pro Magnetelement 5 an einem Ende des Magnetelements 5 ein erster Bereich 3a für den magnetischen Rückschluss und am anderen Ende in Umfangsrichtung des Magnetelements 5 ein Bereich 3b für den magnetischen Rückschluss. Durch das Vorsehen der Aussparung 7 kann somit ohne eine Verschlechterung des magnetischen Rückschlusses eine weitere Gewichtsreduzierung und Materialeinsparung erhalten werden.

Figur 6 zeigt ein Polgehäuse 1 gemäß einem zweiten Ausführungsbeispiel der vorliegenden Erfindung, welches im Wesentlichen dem in Figur 5 gezeigten Ausführungsbeispiel entspricht. Im Unterschied zum ersten Ausführungsbeispiel ist beim zweiten Ausführungsbeispiel zusätzlich noch mindestens ein Befestigungselement 8 vorgesehen. Genauer sind zwei Befestigungselemente 8 vorgesehen, welche jeweils um 180° einander gegenüberliegend angeordnet sind. Die Befestigungselemente 8 sind dabei als vorstehende Bereiche mit einer Durchgangsöffnung gebildet, welche im Wesentlichen senkrecht zum Gehäusegrundkörper 2 des Polgehäuses nach außen vorstehen. Dabei sind die Befestigungselemente 8 an den Bereichen gebildet, an denen die Aussparungen zwischen dem ersten Bereich 3a und dem zweiten Bereich 3b für den magnetischen Rückschluss angeordnet sind. Somit weist dieses Ausführungsbeispiel zusätzlich noch integrierte Befestigungselemente für eine einfache Befestigung der elektrischen Maschine auf.

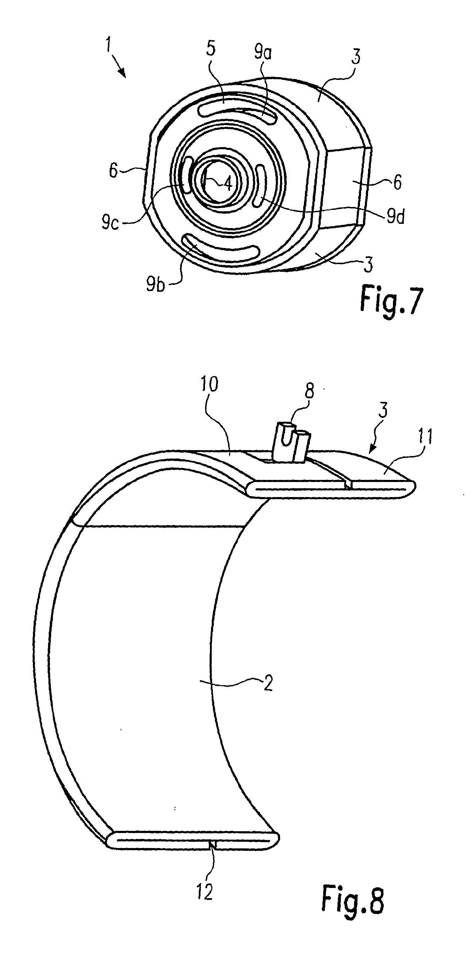

Figur 7 zeigt ein Polgehäuse 1 gemäß einem dritten Beispiel. Bei diesem Beispiel sind im topfförmigen Endbereich des Polgehäuses 1, benachbart zum Lagerbereich 4, mehrere Durchgangsöffnungen 9a, 9b, 9c und 9d ausgebildet. Durch diese Durchgangsöffnungen ist eine verbesserte Kühlung der elektrischen Maschine möglich. Wenn die elektrische Maschine beispielsweise als elektrischer Antrieb für ein Gebläse in einer Klimaanlage eines Fahrzeugs verwendet wird, kann eine verbesserte Kühlung aufgrund einer Durchströmung durch die Durchgangsöffnungen 9a, 9b, 9c und 9d erhalten werden. Weiterhin ergeben sich durch die Durchgangsöffnungen Vorteile hinsichtlich eines Dauerbetriebs des elektrischen Antriebs.

Figur 8 zeigt ein Polgehäuse 1 gemäß einem vierten Beispiel. Im Unterschied zu den vorhergehenden Beispielen bzw. Ausführungsbeispielen ist das in Figur 8 gezeigte Polgehäuse 1 nicht mehr im Wesentlichen topfförmig, sondern im Wesentlichen zylindrisch/rohrförmig ausgebildet. Der Bereich 3 für einen elektrischen Rückschluss ist dabei durch zwei umgebogene Bereiche 10 und 11 gebildet. Die beiden umgebogenen Bereiche 10 und 11 sind dabei jeweils durch Umbiegen der in Axialrichtung liegenden Enden des Gehäusegrundkörpers 2 nach außen gebildet (vgl. Figur 8). Dadurch wird der magnetische Rückschlussbereich 3 bereitgestellt. Wie aus Figur 8 ersichtlich ist, ist hierbei der umgebogene Bereich 10 in Axialrichtung etwas länger als der umgebogene Bereich 11. Dadurch kann im umgebogenen Bereich 10 noch problemlos ein Befestigungselement 8 angeordnet werden, welches durch Umbiegen eines kleinen Abschnitts des Bereichs 10 hergestellt wird. Im Befestigungselement 8 ist dabei eine U-förmige Aussparung zur Aufnahme eines Befestigungsmittels wie z.B. einer Schraube, gebildet. Wie in den vorhergehenden Beispielen bzw. Ausführungsbeispielen sind die umgebogenen Bereiche 10 und 11 wieder spaltfrei zum Gehäusegrundkörper 2 um 180° umgebogen, sodass keine Verluste für den magnetischen Rückschluss auftreten. Eine Rotorwelle der elektrischen Maschine kann z. B. mittels eines oder zweier am Polgehäuse befestigten Lagerbügel gelagert werden.

Die beiden Bereiche 10 und 11 werden dabei derart umgebogen, dass an ihren zueinander gerichteten Stirnseiten möglichst nur ein kleiner Spalt 12 ausgebildet wird. Um den Spalt 12 zu minimieren bzw. völlig zu eliminieren, kann das Polgehäuse 1 auch in Axialrichtung gestaucht werden. Selbstverständlich kann auch nur ein Ende des Polgehäuses umgestülpt werden, wobei dann die Stülplänge der Gehäuselänge des fertigen Polgehäuses entspricht.

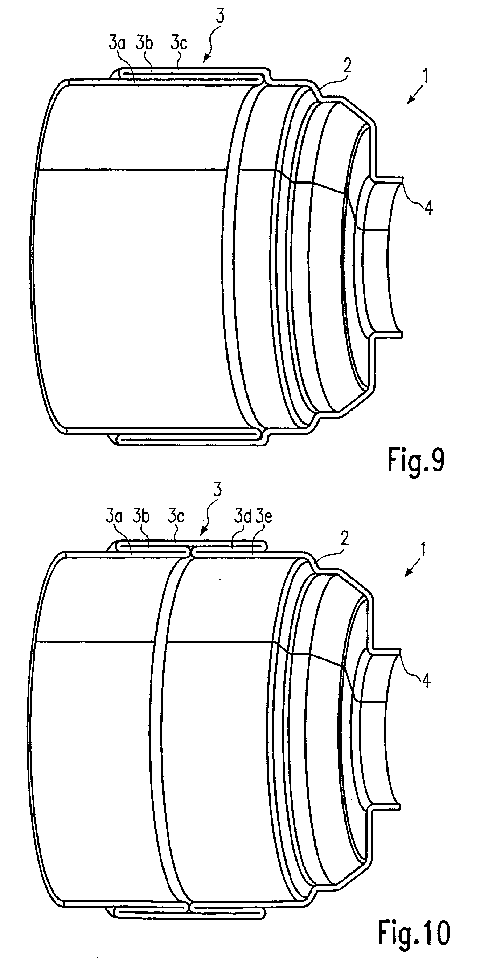

Die Figuren 9 und 10 zeigen zwei weitere Beispiele . Im Unterschied zu den vorhergehenden Beispielen bzw. Ausführungsbeispielen ist bei diesen beiden Beispielen jedoch der Bereich 3 für einen magnetischen Rückschluss nicht mehr durch Umbiegen eines Endabschnitts des Gehäusegrundkörpers hergestellt, sondern durch Umbiegen eines mittleren Abschnitts des Gehäusegrundkörpers 2 hergestellt. Wie in Figur 9 ersichtlich, ist bei diesem Beispiel ein mittlerer Abschnitt des Gehäusegrundkörpers zuerst um 180° nach außen gebogen und anschließend nochmals um 180° zurückgebogen, sodass ein dreilagiger Bereich 3 für den magnetischen Rückschluss entsteht. Der dreilagige Bereich 3 umfasst dabei einzelne Lagen 3a, 3b und 3c. Das Umbiegen erfolgt dabei jeweils über praktisch die gesamte axiale Länge des Bereiches 3 (vgl. Figur 9). Bei dem in Figur 10 gezeigten Beispiel ist ebenfalls ein dreilagiger Bereich 3 für den magnetischen Rückschluss ausgebildet. Dieser Bereich wird jedoch durch zweifaches Umbiegen eines mittleren Abschnitts des Gehäusegrundkörpers erhalten, wobei der Bereich 3 aus den einzelnen Lagen 3a, 3b, 3c, 3d und 3e besteht. Hierbei weisen die Lagen 3a, 3b und 3d, 3e eine axiale Länge auf, welche ungefähr der Hälfte der Axiallänge des Bereichs 3 für den magnetischen Rückschluss entspricht (vgl. Figur 10). Bei den in Figur 9 und 10 gezeigten Beispielen beträgt die Dicke des Gehäusegrundkörpers zwischen 1,2mm und 1,35mm, so dass die Dicke am Bereich 3 ca. das dreifache der Ausgangsdicke davon beträgt.

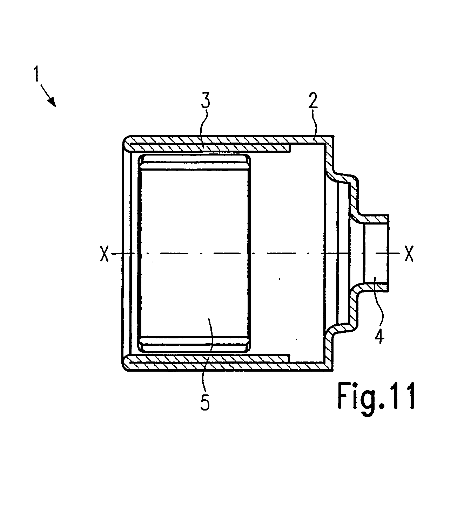

Figur 11 zeigt ein weiteres Beispiel eines Polgehäuses 1. Das in Figur 11 gezeigte Beispiel entspricht dabei im Wesentlichen dem ersten Beispiel, wobei im Unterschied dazu der Bereich 3 für den magnetischen Rückschluss nach innen umgebogen ist. Dadurch liegt der Bereich für den magnetischen Rückschluss am Innenumfang des Gehäusegrundkörpers 2 spaltfrei an (vgl. Figur 11). Weiterhin ist die Länge des Bereichs 3 in Axialrichtung X-X derart gewählt, dass sie auf die Magnetlänge optimiert ist, sodass ein optimaler Rückschluss des Magnetflusses gegeben ist (vgl. Figur 11). Dadurch kann insbesondere in Verbindung mit der Aussparung des Bereichs 3 am neutralen Bereich des Magnetelements ein optimierter Materialeinsatz sichergestellt werden.

Es sei angemerkt, dass die in den Ausführungsbeispielen gezeigten Bereiche 3 für den magnetischen Rückschluss mit den Merkmalen des Anspruchs 1 wie dargestellt mit oder ohne Befestigungselement 8 bzw. Durchgangsöffnungen 9a, 9b, 9c, 9d beliebig kombiniert werden können. Weiterhin kann durch ein Mehrfachumbiegen des Gehäusegrundkörpers 2 und Herstellen des Bereichs 3 aus mehreren Lagen jeweils die Wandstärke des Gehäusegrundkörpers 3 reduziert werden, da durch die Mehrfachlagen die für den magnetischen Rückschluss notwendige Dicke erreicht wird. Die untere Grenze für die Wandstärke des Gehäusegrundkörpers liegt dabei in den Festigkeitsanforderungen des Polgehäuses.

Das erfindungsgemäße Polgehäuse wird besonders bevorzugt in elektrischen Antrieben verwendet, welche in Fahrzeugen zum Antreiben elektrischer Hilfs- und/oder Komforteinrichtungen verwendet werden.

Das erfindungsgemäße Verfahren gemäß Anspruch 18 zur Herstellung eines Polgehäuses umfasst allgemein die Schritte des Herstellens eines zylindrischen Gehäusegrundkörpers 2 und des Umformens eines Abschnitts des Gehäusegrundkörpers 2 derart, um einen zweilagigen oder mehrlagigen Bereich 3 für einen magnetischen Rückschluss bereitzustellen. Wenn das Polgehäuse auch einen integral gebildeten Lagerbereich 4 umfassen soll, kann dabei der Schritt des Umbiegens gleichzeitig mit einem Ziehschritt oder nach dem Ziehschritt zur Herstellung des Lagerbereichs erfolgen. Der Gehäusegrundkörper kann dabei derart vorbearbeitet werden, dass beispielsweise ein Endabschnitt des Gehäusegrundkörpers vollständig nach innen oder außen umgestülpt wird oder dass im Gehäusegrundkörper Aussparungen z.B. mittels Stanzen bereitgestellt werden und anschließend die entsprechenden Abschnitte des Gehäusegrundkörpers umgebogen werden, um den magnetischen Rückschlussbereich 3 mit dazwischen liegenden Aussparungen 7 zu bilden.

## Patentansprüche

1. Polgehäuse für eine elektrische Maschine, umfassend einen Gehäusegrundkörper (2), **Magnetelemente (5)** und einen Bereich (3) für einen magnetischen Rückschluss, welcher einstückig mit dem Gehäusegrundkörper (2) gebildet ist, wobei der Bereich (3) für den magnetischen Rückschluss durch Umformen eines Bereiches des Gehäusegrundkörpers (2) gebildet ist, **dadurch gekennzeichnet, dass der Bereich (3) für den magnetischen Rückschluss an der Position der mittleren Bereiche der Magnetelemente (5) Aussparungen (7) aufweist.**

2. Polgehäuse nach Anspruch 1, **dadurch gekennzeichnet, dass** der Bereich (3) für den magnetischen Rückschluss spaltfrei am Gehäusegrundkörper (2) anliegt.

3. Polgehäuse nach einem der vorhergehenden Ansprüche, **dadurch gekennzeichnet, dass** der Bereich (3) für den magnetischen Rückschluss durch **einen nach außen umgebogenen** Bereich des Gehäusegrundkörpers (2) gebildet ist.

4. Polgehäuse nach einem der Ansprüche 1 oder 2, **dadurch gekennzeichnet, dass** der Bereich (3) für den magnetischen Rückschluss durch **einen nach innen umgebogenen** Bereich des Gehäusegrundkörpers (2) gebildet ist.

5. Polgehäuse nach einem der vorhergehenden Ansprüche, **dadurch gekennzeichnet, dass** der Bereich (3) für den magnetischen Rückschluss aus mehreren umgebogenen Bereichen (3a, 3b; 3a, 3b, 3c, 3d, 3e;10, 11) gebildet ist.

6. Polgehäuse nach einem der vorhergehenden Ansprüche, **dadurch gekennzeichnet, dass** am Gehäusegrundkörper (2) ein Lagerbereich (4) zur Lagerung eines Rotors der elektrischen Maschine integral gebildet ist.

7. Polgehäuse nach einem der vorhergehenden Ansprüche, **dadurch gekennzeichnet, dass** der Bereich (3) für den magnetischen Rückschluss in Axialrichtung kürzer als die axiale Länge des Gehäusegrundkörpers (2) ausgebildet ist.

8. Polgehäuse nach Anspruch 7, **dadurch gekennzeichnet, dass** der Bereich (3) für den magnetischen Rückschluss in Axialrichtung eine Länge aufweist, welche größer als eine Breite eines am Polgehäuse angeordneten Magnetelements (5) ist.

9. Polgehäuse nach einem der vorhergehenden Ansprüche, **dadurch gekennzeichnet, dass** der Bereich (3) für den magnetischen Rückschluss durch einen umgebogenen axialen Endabschnitt des Gehäusegrundkörpers (2) gebildet ist.

10. Polgehäuse nach einem der Ansprüche 1 bis 8, **dadurch gekennzeichnet, dass** der Bereich für den magnetischen Rückschluss durch einen umgebogenen mittleren Abschnitt des Gehäusegrundkörpers (2) gebildet ist.

11. Polgehäuse nach einem der vorhergehenden Ansprüche, **dadurch gekennzeichnet, dass** am Gehäusegrundkörper (2) ein Befestigungselement (8) integral gebildet ist.

12. Polgehäuse nach Anspruch 11, **dadurch gekennzeichnet, dass** das Befestigungselement (8) durch einen weiteren umgebogenen Bereich des Gehäusegrundkörpers gebildet ist.

13. Polgehäuse nach Anspruch 11 oder 12 **dadurch gekennzeichnet, dass** das Befestigungselement (8) in der Aussparung (7) des Bereichs (3) für den magnetischen Rückschluss angeordnet ist.

14. Polgehäuse nach einem der vorhergehenden Ansprüche, **gekennzeichnet durch** einen abgeflachten Bereich (6) am äußeren Umfang des Polgehäuses.

15. Polgehäuse nach einem der vorhergehenden Ansprüche, **dadurch gekennzeichnet, dass** der Gehäusegrundkörper im Wesentlichen zylindrisch ausgebildet ist und der Bereich (3) für den magnetischen Rückschluss durch Umbiegen eines oder beider in Axialrichtung liegenden Endbereiche des Gehäusegrundkörpers (2) gebildet ist.

16. Polgehäuse nach einem der vorhergehenden Ansprüche, **dadurch gekennzeichnet, dass** im Gehäusegrundkörper (2) Durchgangsöffnungen (9a, 9b, 9c, 9d) gebildet sind.

17. Elektrische Maschine, insbesondere elektrischer Antrieb, umfassend ein Polgehäuse nach einem der vorhergehenden Ansprüche.

18. Verfahren zur Herstellung eines Polgehäuses (1) mit einem Gehäusegrundkörper (2), wobei ein am Polgehäuse integral gebildeter Bereich (3) für einen magnetischen Rückschluss eines Magnetelements (5) durch mindestens einen Umformschritt eines Abschnitts des Gehäusegrundkörpers (2) hergestellt ist, **dadurch gekennzeichnet, dass an dem Bereich (3) für den magnetischen Rückschluss an der Position der mittleren Bereiche der Magnetelemente (5) Aussparungen (7) ausgebildet werden.**

## Claims

1. Pole housing for an electrical machine, comprising a housing basic body (2), magnet elements (5) and a region (3) for a magnetic return path, which is formed integrally with the housing basic body (2), the region (3) for the magnetic return path being formed by a region of the housing basic body (2) being deformed, **characterized in that** the region (3) for the magnetic return path has cut-outs (7) at the position of the central regions of the magnet elements (5).

2. Pole housing according to Claim 1, **characterized in that** the region (3) for the magnetic return path bears, without any gaps, against the housing basic body (2).

3. Pole housing according to one of the preceding claims, **characterized in that** the region (3) for the magnetic return path is formed by an outwardly bent region of the housing basic body (2).

4. Pole housing according to either of Claims 1 and 2, **characterized in that** the region (3) for the magnetic return path is formed by an inwardly bent region of the housing basic body (2).

5. Pole housing according to one of the preceding claims, **characterized in that** the region (3) for the magnetic return path is formed from a plurality of bent regions (3a, 3b; 3a, 3b, 3c, 3d, 3e; 10, 11).

6. Pole housing according to one of the preceding claims, **characterized in that** a mount region (4) for mounting a rotor of the electrical machine is formed integrally on the housing basic body (2).

7. Pole housing according to one of the preceding claims, **characterized in that** the region (3) for the magnetic return path is designed to be shorter in the axial direction than the axial length of the housing basic body (2).

8. Pole housing according to Claim 7, **characterized in that** the region (3) for the magnetic return path has a length in the axial direction which is greater than a width of a magnet element (5) arranged on the pole housing.

9. Pole housing according to one of the preceding claims, **characterized in that** the region (3) for the magnetic return path is formed by a bent, axial end section of the housing basic body (2).

10. Pole housing according to one of Claims 1 to 8, **characterized in that** the region for the magnetic return path is formed by a bent, central section of the housing basic body (2).

11. Pole housing according to one of the preceding claims, **characterized in that** a fastening element (8) is formed integrally on the housing basic body (2).

12. Pole housing according to Claim 11, **characterized in that** the fastening element (8) is formed by a further bent region of the housing basic body.

13. Pole housing according to Claim 11 or 12, **characterized in that** the fastening element (8) is arranged in the cut-out (7) in the region (3) for the magnetic return path.

14. Pole housing according to one of the preceding claims, **characterized by** a flattened region (6) on the outer circumference of the pole housing.

15. Pole housing according to one of the preceding claims, **characterized in that** the housing basic body is substantially cylindrical, and the region (3) for the magnetic return path is formed by one or both end regions, positioned in the axial direction, of the housing basic body (2) being bent.

16. Pole housing according to one of the preceding claims, **characterized in that** through-openings (9a, 9b, 9c, 9d) are formed in the housing basic body (2).

17. Electrical machine, in particular electrical drive, comprising a pole housing according to one of the preceding claims.

18. Method for producing a pole housing (1) with a housing basic body (2), a region (3) formed integrally on the pole housing for a magnet return path of a magnet element (5) being produced by at least one deforming step of a section of the housing basic body (2), **characterized in that** cut-outs (7) are formed in the region (3) for the magnetic return path at the position of the central regions of the magnet elements (5).

## Revendications

1. Boîtier polaire pour machine électrique, comprenant un corps de base (2) de boîtier, des éléments magnétiques (5) et une partie de fermeture magnétique (3) formée d'un seul tenant avec le corps de base (2) du boîtier, la partie de fermeture magnétique (3) étant formée par déformation d'une partie du corps de base (2) du boîtier,
**caractérisé en ce que**
la partie de fermeture magnétique (3) présente des découpes (7) en des positions correspondant aux parties centrales des éléments magnétiques (5).

2. Boîtier polaire selon la revendication 1, **caractérisé en ce que** la partie de fermeture magnétique (3) repose sans interstice sur le corps de base (2) du boîtier.

3. Boîtier polaire selon l'une des revendications précédentes, **caractérisé en ce que** la partie de fermeture magnétique (3) est formée par une partie rabattue vers l'extérieur du corps de base (2) du boîtier.

4. Boîtier polaire selon l'une des revendications 1 ou 2, **caractérisé en ce que** la partie de fermeture magnétique (3) est formée par une partie rabattue vers l'intérieur du corps de base (2) du boîtier.

5. Boîtier polaire selon l'une des revendications précédentes, **caractérisé en ce que** la partie de fermeture magnétique (3) est formée de plusieurs parties rabattues (3a, 3b; 4a, 3b, 3c, 3d, 3e; 10, 11).

6. Boîtier polaire selon l'une des revendications précédentes, **caractérisé en ce qu'**une partie de montage (4) qui permet de monter le rotor de la machine électrique est formée d'un seul tenant avec le corps de base (2) du boîtier.

7. Boîtier polaire selon l'une des revendications précédentes, **caractérisé en ce que** la partie de fermeture magnétique (3) est configurée plus courte dans la direction axiale que la longueur axiale du corps de base (2) du boîtier.

8. Boîtier polaire selon la revendication 7, **caractérisé en ce que** la partie de fermeture magnétique (3) présente dans la direction axiale une longueur supérieure à la largeur d'un élément magnétique (5) disposé sur le boîtier polaire.

9. Boîtier polaire selon l'une des revendications précédentes, **caractérisé en ce que** la partie de fermeture magnétique (3) est formée par une partie terminale axiale rabattue du corps de base (2) du boîtier.

10. Boîtier polaire selon l'une des revendications 1 à 8, **caractérisé en ce que** la partie de fermeture magnétique est formée par une partie centrale rabattue du corps de base (2) du boîtier.

11. Boîtier polaire en ce qu'un élément de fixation (8) est formé d'un seul tenant avec le corps de base (2) du boîtier.

12. Boîtier polaire selon la revendication 11, **caractérisé en ce que** l'élément de fixation (8) est formé par une autre partie rabattue du corps de base du boîtier.

13. Boîtier polaire selon les revendications 11 ou 12, **caractérisé en ce que** l'élément de fixation (8) est disposé dans la découpe (7) ménagée dans la partie de fermeture magnétique (3).

14. Boîtier polaire selon l'une des revendications précédentes, **caractérisé par** une partie aplatie (6) à la périphérie extérieure du boîtier polaire.

15. Boîtier polaire selon l'une des revendications précédentes, **caractérisé en ce que** le corps de base du boîtier a une configuration essentiellement cylindrique et **en ce que** la partie de fermeture magnétique (3) est formée par rabattement de la partie d'extrémité ou des deux parties d'extrémité situées dans la direction axiale du corps de base (2) du boîtier.

16. Boîtier polaire selon l'une des revendications précédentes, **caractérisé en ce que** des ouvertures de passage (9a, 9b, 9c, 9d) sont formées dans le corps de base (2) du boîtier.

17. Machine électrique, en particulier entraînement électrique, comprenant un boîtier polaire selon l'une des revendications précédentes.

18. Procédé de fabrication d'un boîtier polaire (1) doté d'un corps de base (2) de boîtier, d'une partie de fermeture magnétique (3) d'un élément magnétique (5), formée d'un seul tenant avec le boîtier polaire, étant réalisée dans au moins une étape de façonnage d'une partie du corps de base (2) du boîtier,
**caractérisé en ce que**
des découpes (7) sont réalisées dans la partie de fermeture magnétique (3) en des positions correspondant aux parties centrales des éléments magnétiques (5).
